# FASCICULE DE BREVET EUROPEEN

(11) **EP 0 814 350 B1**
(45) Date de publication et mention de la délivrance du brevet: **02.05.2003**
(21) Numéro de dépôt: 97401414.4
(22) Date de dépôt: 19.06.1997
(51) Int. Cl.: G02B 1/10, G02B 5/28

(54) **Empilement multicouche de matériaux fluorures, utilisable en optique et son procédé de fabrication**
Vielschichtanordnung fluorierter Materialien zur Verwendung in der Optik und Verfahren zu ihrer Herstellung
Optically usable multilayer stack of fluoride materials and its method of manufacturing

(30) Priorité: 21.06.1996 FR 9607759
(43) Date de publication de la demande: 29.12.1997
(73) Titulaire: COMMISSARIAT A L'ENERGIE ATOMIQUE, 75015 Paris (FR); ETAT FRANCAIS représenté par le Délégué Général pour l'Armement, F-00460 Armées (FR)
(72) Inventeur: Quesnel, Etienne, 38240 Meylan (FR); Robic, Jean-Yves, 38100 Grenoble (FR); Rolland, Bernard, 38240 Meylan (FR); Dijon, Jean, 38800 Champagnier (FR)
(74) Mandataire: Audier, Philippe André

(56) Documents cités:
- S.MCELDOWNEY ET AL.: "INTRINSIC STRESS IN MIXTURES OF FLUORIDE THIN FILMS" PROCEEDINGS OF OPTICAL INTERFERENCE COATINGS CONFERENCE, juin 1995, TUCSON, pages 269-271, XP000602851
- J.A.DOBROWOLSKI ET AL.: "INTERFACE DESIGN METHODS FOR TWO-MATERIAL OPTICAL MULTILAYER COATINGS" APPLIED OPTICS, vol. 31, no. 31, 1 novembre 1992, NEW YORK US, pages 6747-6786, XP000310817

## Description

### Domaine technique

L'invention concerne un empilement multicouche de matériaux fluorures, utilisable pour le traitement de composants optiques. Cet empilement peut assurer par exemple une fonction optique de type miroir, filtre spectral ou couche anti-reflet, dans le domaine spectral allant de l'ultra violet à l'infrarouge, ou jouer le rôle de revêtement protecteur déposé sur un composant optique préexistant, par exemple pour le protéger contre la dégradation par des flux lasers intenses.

### Etat de la technique antérieur.

Dans le domaine de l'optique, la réalisation d'une fonction optique donnée, par exemple de miroir, de filtre spectral ou de couche anti-reflet, peut être remplie au moyen d'un empilement de couches minces dont l'épaisseur totale peut aller typiquement de quelque dixièmes de micromètres à quelques micromètres.

Selon la complexité de la fonction optique souhaitée, l'empilement comprend un ou plusieurs matériaux d'indices optiques différents. Dans la majeure partie des cas deux matériaux, l'un de haut indice optique n₁, l'autre de bas indice n₂ inférieur à n₁, suffisent pour remplir ces fonctions. Le choix des matériaux est le plus souvent guidé par des considérations d'ordre purement optique liées aux constantes optiques des matériaux (indice de réfraction n, et coefficient d'extinction k) mais également à leur domaine spectral de transparence. Parmi les nombreux matériaux couramment utilisés, on peut citer les trois familles principales suivantes :
- les composés oxydes comprenant, notamment, la silice (bas indice) mais aussi les différents oxydes de titane, tantale, zirconium, hafnium, aluminium, etc.. (hauts indices). Ces matériaux sont largement utilisés pour des applications dans le visible et, pour certains, dans l'ultraviolet.
- les matériaux spécifiquement destinés aux applications dans l'infrarouge, tels que les chalcogénures (ZnS, ZnSe) ou encore le germanium.
- les matériaux fluorures qui regroupent une vaste gamme de composés (MgF₂, CaF₂, YF₃, LaF₃, NaAlF₄, etc...) et qui ont la particularité de présenter, pour la plupart, un très large domaine spectral de transparence, allant typiquement de 0,2 à 10 µm. Leur domaine potentiel d'application est donc extrêmement étendu et va de l'ultraviolet profond à l'infrarouge. On peut citer, par exemple, leur utilisation courante pour des applications dans l'infrarouge (YF₃, ThF₄) ou en tant que matériau anti-reflet dans le visible (CaF₂, MgF₂).

Les matériaux fluorures présentent des atouts optiques évidents, notamment pour la réalisation de miroirs dans le domaine ultra-violet, mais leur développement dans des applications optiques complexes pose certains problèmes, en raison de la difficulté d'obtenir des structures empilées de couches minces mécaniquement stables sans dégradation des performances optiques.

Les problèmes de réalisation d'un empilement de couches minces de fluorures sont dus principalement aux propriétés mécaniques particulières des fluorures et à leur nature chimique.

En effet, les fluorures présentent un fort coefficient de dilatation thermique, en moyenne dix fois celui des oxydes, ce qui se traduit, après dépôt, par la présence dans les couches de contraintes de tension de plusieurs centaines de MPa. Il en résulte que pour la plupart des applications, les couches de fluorure se décollent par fissuration lorsque leur épaisseur dépasse environ 1 µm.

Dans les fluorures, la liaison fluor monovalente(-F) rend difficile l'adhérence chimique entre les matériaux fluorures, ce qui limite considérablement la réalisation de structures multicouches mécaniquement stables.

De plus, les fluorures sont des matériaux qui cristallisent facilement à basse température ; en conséquence, les différentes interfaces dans les empilements de couches de fluorures génèrent des pertes optiques par diffusion dont le niveau peut devenir critique, en particulier dans le domaine ultraviolet.

Pour obtenir un empilement satisfaisant de couches de fluorures, il est donc nécessaire d'améliorer, d'une part, les propriétés mécaniques des couches de fluorures (contraintes, densité) et, d'autre part, les caractéristiques mécaniques et optiques des interfaces (adhérence, diffusivité).

Les couches de fluorures sont généralement obtenues par des techniques de dépôt sous vide, en particulier des techniques d'évaporation sous vide. Dans ces techniques, le flux de matière déposée est très faiblement énergétique, et de ce fait les couches obtenues sont poreuses, voire inhomogènes. On peut remédier à ce problème en déposant les couches à chaud pour les densifier et diminuer les contraintes de tension. Toutefois, comme l'indique R.Chow et al dans SPIE, volume 1848, 1992, pages 312-321, dans le cas des couples de matériaux LaF₃, NdF₃ ou GdF₃/Na₃AlF₆, les très fortes contraintes de tension dans l'empilement de couches alternées restreignent les empilements à cinq paires maximum, soit une réflectivité maximale limitée à 50 % à 355 nm.

Pour limiter ces problèmes mécaniques, les solutions envisagées consistent soit à stabiliser mécaniquement les couches en utilisant des procédés de dépôt énergétiques, soit à modifier la composition des couches.

Ainsi, des techniques d'évaporation assistée par faisceau d'ions (IAD-Ion Beam Deposition) et de pulvérisation par faisceau d'ions (IBS-Ion Beam Sputtering) ont été développées dans ce but (voir Izawa et al : SPIE, volume 1848, 1992, pages 322-329, et SPIE, volume 2114, 1993, pages 297-308 ; et J. Kolbe et al : SPIE, volume 1624, 1991, pages 221-235 ; SVC, « 36th Annual Technical Conference Proceedings », 1993, pages 44-50, et SPIE, volume 1782, 1993, pages 435-446).

Une modification de la composition des couches, par exemple par incorporation de SrF₂ dans YF₃ ou LaF₃, a été décrite par S. Mc Eldowney et L. Brown, Proceedings of Optical Interference Coatings Conference, Tucson, Juin 1995, pages 269-271. Cette incorporation de SrF₂ permet de diminuer les contraintes de tension dans YF₃ et LaF₃, mais elle s'accompagne d'une augmentation importante de rugosité, ce qui nuit à la qualité des interfaces entre couches.

Les techniques connues permettent ainsi d'améliorer les propriétés mécaniques des couches, mais on ne connaît aucune technique permettant d'améliorer l'adhérence entre couches. Lorsque les composants s'appliquent à des longueurs d'onde courtes (λ < 250 nm), les empilement miroirs ont une épaisseur ne dépassant pas 1,5 µm, et ce manque d'adhérence entre couches n'est pas trop gênant. En revanche, pour des longueur d'onde plus grandes telles que λ = 355 nm et à fortiori dans le visible, les épaisseurs des miroirs dépassent 2,5 µm et il est nécessaire d'avoir dans l'empilement des interfaces particulièrement robustes, sinon l'empilement risque de ne pas conserver sa cohésion physique.

On pourrait envisager de renforcer ces interfaces en utilisant une couche intermédiaire de type oxyde susceptible d'adhérer sur les deux couches de fluorures concernées. Cependant, dans le cas d'un empilement multicouche, l'ajout de cette couche intermédiaire complique le procédé de dépôt et multiplie par deux le nombre d'interfaces. Ceci nuit à la fiabilité intrinsèque du composant, notamment en matière de résistance aux flux laser intenses, et risque d'accroître également les pertes optiques du composant final, en raison de la multiplication des interfaces couplée aux phénomènes de diffusion de la lumière à ces interfaces.

### Exposé de l'invention

La présente invention a précisément pour objet un empilement multicouche de matériaux fluorures pour composants optiques, ayant les caractéristiques récitées dans la revendication 1, ainsi que les procédés des revendications 8 et 9, qui permet de résoudre ce problème particulier du manque d'adhérence entre les couches de l'empilement.

Les revendications dépendantes concernent des modes de réalisation additionnels.

Selon l'invention, l'empilement multicouche de matériaux fluorures pour composant optique, constitué de couches alternées d'un premier matériau à haut indice n₁ et d'un second matériau à indice bas n₂ inférieur à n₁, est caractérisé en ce que le premier et le second matériaux sont des fluorures transparents, capables de former l'un avec l'autre un composé défini et stable, et en ce que l'interface entre chaque couche du premier matériau et chaque couche du second matériau est formée au moins en partie de ce composé défini et stable.

Ainsi, selon l'invention, grâce au choix judicieux des fluorures constituant le premier et le second matériaux des couches alternées, on obtient des interfaces particulièrement robustes, ayant des propriétés optiques très proches du premier et du second matériaux, notamment en matière de domaine de transparence.

En effet, en raison de la forte affinité chimique entre le premier matériau et le second matériau, l'adhérence des deux matériaux est grandement favorisée. De plus, l'interface formée peut être très fine (quelques couches monoatomiques), ce qui évite les problèmes de pertes optiques par diffusion.

Selon un premier mode de réalisation de l'invention, l'interface est constituée principalement du composé défini et stable, résultant de l'association des deux matériaux.

La structure de l'empilement correspond dans ce cas à une succession alternée de couches du premier et du second matériaux reliées entre elles par des interfaces, de quelques manomètres d'épaisseur, constituées principalement du composé défini.

Selon un second mode de réalisation de l'invention, l'interface est une interface graduelle comprenant un mélange du premier matériau et du composé défini, puis un mélange du second matériau et du composé défini, la composition de cette interface évoluant de façon à passer progressivement de la composition du premier matériau à la composition du second matériau.

En ce qui concerne l'adhérence, la structure est à priori équivalence à celle obtenue dans le premier mode de réalisation de l'invention, mais elle présente l'avantage supplémentaire de supprimer complètement les interfaces en ce qui concerne l'optique.

Selon l'invention, les fluorures utilisés pour les deux matériaux sont choisis en fonction de leur domaine de transparence. En effet, il est particulièrement intéressant qu'ils soient transparents sur un très large spectre optique, par exemple, dans le domaine des longueurs d'onde allant de 200 nm à 12 µm. Ils sont choisis par ailleurs de façon à former un composé défini et stable.

A titre d'exemple de matériaux fluorures convenant pour la réalisation des couches d'indice haut n₁, on peut citer les fluorures ErF₃, YF₃, CeF₃ et BaF₂.

A titre d'exemple de matériaux fluorures susceptibles d'être utilisés pour la réalisation des couches d'indice bas n₂, on peut citer les fluorures LiF, KF, BaF₂ et AlF₃.

On peut associer en particulier ces matériaux comme il est illustré dans le tableau 1 qui suit.

**Tableau 1**

| **Premier matériau (Indice haut n**_{**1**}**)** | **Second matériau (Indice bas n**_{**2**}**)** | **Composé défini stable** |
|---|---|---|
| YF₃ | LiF | YLiF₄ |
| YF₃ | BaF₂ | YBaF₅ |
| | | Y₂Ba₂F₈ |
| YF₃ | KF | KY₃F₁₀ |
| ErF₃ | LiF | LiErF₄ |
| CeF₃ | KF | K CeF₄ |
| | | K₃CeF₆ |
| | | Ba₃AlF_{g} |
| BaF₂ | AlF₃ | Ba₃Al₂F₁₂ |
| | | BaAlF₅ |
| | | Ba₂AL₃F₁₃ |

A titre d'exemple, l'épaisseur totale de l'empilement peut être de 0,1 à 100 µm.

Pour obtenir les interfaces conformes à l'invention, on peut fabriquer l'empilement multicouche par dépôt sous vide, de préférence par dépôt sous vide intrinsèquement énergétique, par exemple en utilisant la pulvérisation par faisceau d'ions (IBS-Ion Beam Sputtering).

Aussi, l'invention a également pour objet un procédé de fabrication d'un empilement multicouche d'un premier et d'un second matériaux fluorures, selon lequel on dépose chaque couche du premier et du second matériaux par dépôt sous vide par pulvérisation par faisceau d'ions, à partir de cibles constituées respectivement du premier matériau fluorure et du second matériau fluorure.

On peut utiliser comme source ionique de pulvérisation un canon à ions permettant de produire un faisceau d'ions ayant une énergie appropriée, par exemple de 500 à 2000 eV.

Lorsqu'on veut obtenir des interfaces constituées principalement du composé défini et stable formé par l'association des deux matériaux, on pulvérise successivement et alternativement l'une et l'autre cibles correspondant à ces matériaux.

En revanche, lorsqu'on veut des interfaces progressives, il est nécessaire de disposer d'une seconde source ionique de pulvérisation et le passage d'une couche à l'autre se fait alors en pulvérisant en même temps les deux cibles et en modulant dans le temps le courant ionique de pulvérisation de l'une des cibles par rapport à l'autre de manière à obtenir un profil de composition d'interface progressif et continu.

Selon l'invention, le choix de la technique de dépôt par pulvérisation ionique, qui produit un flux de matière dix à cent fois plus énergétique que l'évaporation, présente de nombreux avantages.

En effet, il permet d'induire dans les couches de fluorures des contraintes de compression (quelques centaines de MPa), ce qui permet le dépôt de structures épaisses allant jusqu'à 100 µm. Par ailleurs, les couches ainsi déposées se caractérisent par une densité particulièrement élevée (supérieure à 90 % de la valeur du matériau massif). Il en résulte que, contrairement aux couches produites par évaporation sous vide, elle sont très peu sensibles à l'environnement. Cela se traduit par le fait qu'une modification de l'humidité environnante ne produit aucune variation notable des contraintes mécaniques et de la réponse optique du composant multicouche. Ce point est particulièrement intéressant quant on connaît l'extrême avidité dont font preuve les matériaux fluorures vis-à-vis de l'eau.

Enfin, l'emploi de cette technique de dépôt par faisceau d'ions des fluorures présente l'avantage de minimiser la diffusion optique aux faibles longueurs d'onde dans l'ultraviolet.

En revanche, avec la technique classique d'évaporation des fluorures, on obtient des miroirs dont les performances dans l'ultraviolet profond (par exemple à 193 nm) sont aujourd'hui limitées par la forte diffusion des dépôt.

D'autres caractéristiques et avantages de l'invention apparaîtront mieux à la lecture de la description qui suit en référence aux dessins annexés.

### Brève description des dessins.

La figure 1 représente de façon schématique l'interface simple entre deux couches d'un empilement multicouche conforme au premier mode de réalisation de l'invention.

La figure 2 représente l'interface graduelle entre deux couches d'un empilement multicouche conforme au second mode de réalisation de l'invention.

La figure 3 est un diagramme illustrant la réflexion (R) et la transmission (T) de deux empilements multicouches conformes à l'invention en fonction de la longueur d'onde (en nm).

La figure 4 illustre les indices de réfraction des matériaux fluorures YF₃ et LiF en fonction de la longueur d'onde (en nm).

La figure 5 illustre les variations du coefficient d'extinction (k) de YF₃ et LiF en fonction de la longueur d'onde (en nm).

La figure 6 illustre la réflectivité (Rs) en fonction de la longueur d'onde(en nm) d'un miroir dichroïque composé de couches alternées de YF₃ et LiF.

La figure 7 est un diagramme illustrant l'évolution du coefficient d'extinction (k) de YF₃ en fonction du rapport F/Y.

La figure 8 illustre la réflectivité (Rs) en fonction de la longueur d'onde d'un miroir dichroïque conforme à l'invention.

### Exposé détaillé des modes de réalisation.

Dans la description qui suit on a utilisé comme premier matériau fluorure de haut indice n₁, le fluorure d'yttrium YF₃, et comme second matériau fluorure d'indice bas n₂, le fluorure de lithium LiF. Ces deux matériaux peuvent s'associer pour donner naissance au composé défini YLiF₄. Compte tenu de cette forte affinité chimique, l'adhérence des deux matériaux YF₃ et LiF est grandement favorisée. L'interface ainsi formée présente l'avantage de pouvoir être très fine (quelques couches monoatomiques) et, de plus, d'être composée de YLiF₄ dont les propriétés optiques sont très proches de celle de YF₃ et de LiF, notamment en matière de domaine de transparence.

On précise que YF₃ est transparent sur un très large spectre optique couvrant les longueurs d'ondes de 0,2 à 13 µm, et que LiF est transparent également sur un très large spectre optique, couvrant les longueurs d'onde de 0,1 à 5 µm.

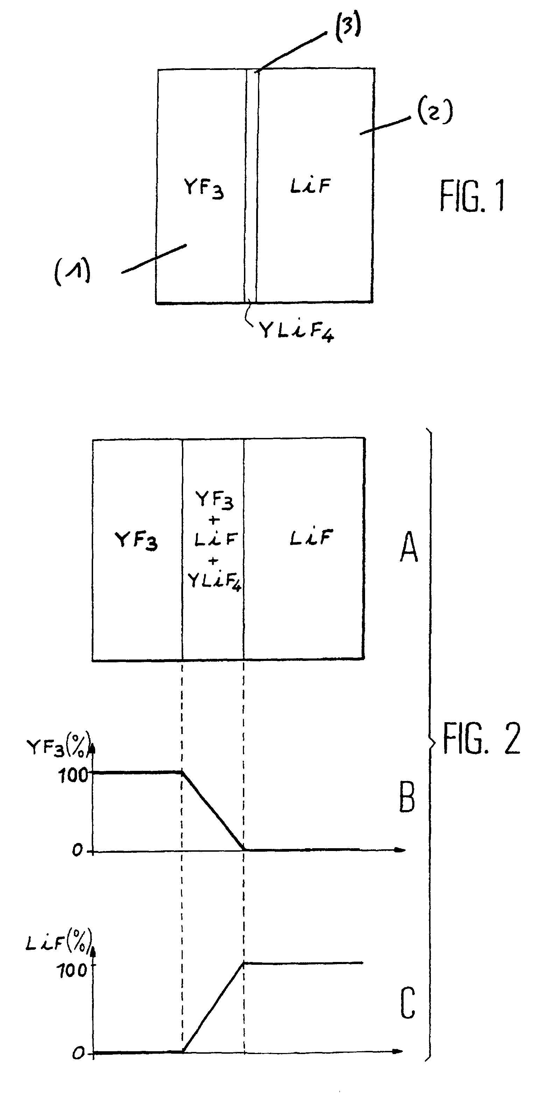

Pour préparer un empilement conforme au premier mode de réalisation de l'invention, on dépose alternativement ces deux matériaux par pulvérisation par faisceau d'ions d'une cible YF₃ et d'une cible de LiF, et on obtient chaque couche en pulvérisant la cible correspondante. Les interfaces obtenues dans ce cas sont représentées sur la figure 1.

Sur cette figure 1, on voit l'interface formée de YLiF₄ entre une couche du premier matériau YF₃ et une couche du second matériau LiF. Il s'agit d'une interface de très faible épaisseur (quelques nm).

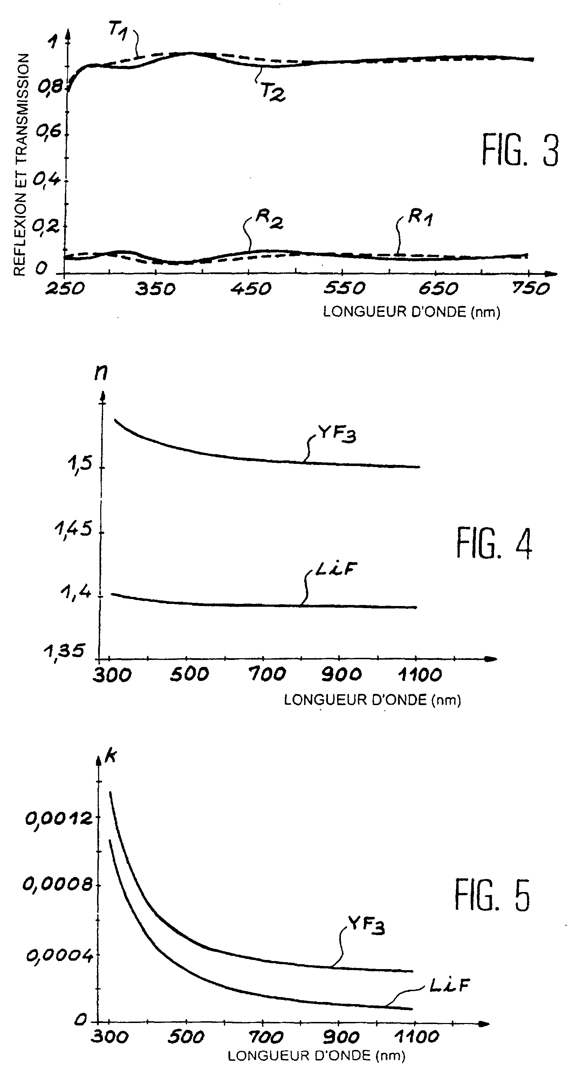

Sur la figure 2, on a représenté l'interface obtenue conformément au second mode de réalisation de l'invention, dans lequel on réalise les couches également par pulvérisation par faisceau d'ions à partir de mêmes cibles mais en utilisant deux sources ioniques de pulvérisation et en modulant en fonction du temps le courant ionique de pulvérisation de l'une des cibles par rapport à l'autre de manière à produire un profil de composition d'interface continu allant de YF₃ pur à LiF pur.

Dans ce cas, comme on peut le voir sur la figure 2, l'interface entre une couche de YF₃ et d'une couche de LiF est formé d'une mélange de YF₃, LiF et YLiF₄. La concentration en YF₃ de l'interface varie linéairement en fonction du temps de 100 % à 0 %, comme représenté en B sur la figure 2, et il en est de même de la concentration en LiF (C, figure 2) qui passe de 0 à 100 % pendant le même temps, correspondant à la réalisation de l'interface.

Les caractéristiques des couches de LiF et de YF₃ réalisées par pulvérisation par faisceau d'ions sont les suivantes :
- YF₃ : n₁ à 355 nm = 1,54 ± 0,2
- LiF : n₂ à 355 nm = 1, 41 ± 0,2
- Coefficient d'extinction (k) à 355 nm de chaque couche tel que k ≤ 1.10⁻³.
Les exemples qui suivent illustrent la réalisation d'empilements multicouches formés de couches alternées de YF₃ et de LiF.

### Exemple 1 : Empilement de quatre couches alternées.

Pour réaliser cet empilement, on utilise la technique de dépôt par pulvérisation par faisceau d'ions au moyen d'un canon à ions générant un faisceau d'ions d'une énergie de 1100 eV et de deux cibles de YF₃ et LiF. On dépose ainsi sur un substrat en silice, quatre couches alternées de YF₃ et LiF, soit deux couches de YF₃ et deux couches de LiF, ayant les épaisseurs suivantes 58 nm pour YF₃ et 64 nm pour LiF.

On détermine ensuite la réponse optique de l'empilement, soit sa réflexion R et sa transmission T en fonction de la longueur d'onde (en nm). Les courbes R1 et T1 en tirets de la figure 3 illustrent respectivement les résultats obtenus en réflexion et en transmission avec cet empilement.

### Exemple 2 : Réalisation d'un empilement composé de six couches alternées.

On suit le même mode opératoire que dans l'exemple 1 pour déposer six couches alternées de YF₃ et LiF (trois couches de YF₃ et trois couches de LiF) et on détermine également la réponse optique de l'empilement.

Les résultats obtenus sont donnés sur la figure 3 où la courbe R2 représente la réflexion de cet empilement et la courbe T2 représente la transmission. On observe ainsi que suivant le nombre de couches déposées, le couple YF₃/LiF permet de moduler la réponse optique ce l'empilement. De plus, un tel empilement multicouche peut être utilisé comme couche de protection car il présente un bon comportement sous flux laser, notamment dans l'ultraviolet. A la fluence de rupture de l'empilement, on observe que celui-ci malgré l'endommagement laser s'est soulevé du substrat mais sans aucun décollement des couches alternées de fluorures entre elles. Cela montre l'extrême solidité de la liaison YF₃/LiF.

### Exemple 3 : Miroir dichroïque centré à λ = 3 ω (351 nm)

Avant de réaliser cet empilement, on a déterminé les caractéristiques optiques des monocouches de YF₃ et de LiF en fonction de la longueur d'onde dans la gamme de longueurs d'ondes allant de 300 à 800 nm. Les courbes de la figure 4 représentent les variations de l'indice de réfraction (n) de YF₃ et de LiF en fonction de la longueur d'onde. La figure 5 représente les variations des coefficients d'extinction (k) en fonction de la longueur d'onde.

A partir de ces caractéristiques, on a réalisé un empilement composé de couches alternées de YF₃ et de LiF d'épaisseurs e₁ et e₂ telles que ne = λ/4. Les épaisseurs de couches étaient respectivement e₁ = 58nm pour YF₃ et e₂ = 64 nm pour LiF. On a empilé ainsi 61 couches alternées en commençant et en terminant par YF₃. L'épaisseur totale de l'empilement était de 3,7 µm.

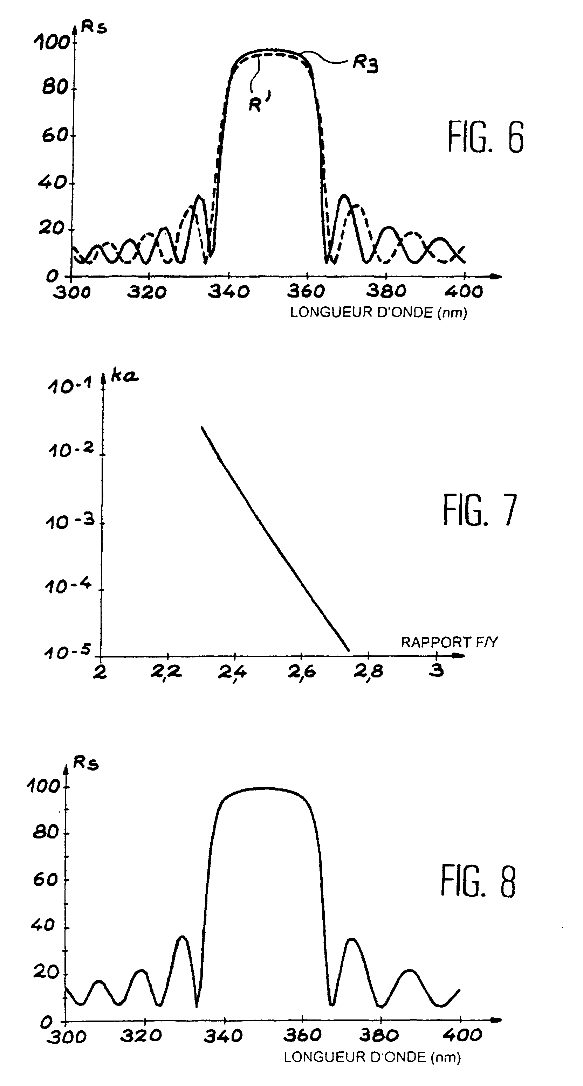

La courbe R3 de la figure 6 illustre la reflectivité d'un tel empilement en fonction de la longueur d'onde. On remarque ainsi qu'on obtient une réflectivité maximale de 97 % à 351 nm.

### Exemple 4 : Miroir dichroïque centré à 351 nm.

Dans cet exemple, on prépare un empilement de couches alternées de YF₃ et de LiF en utilisant comme cibles du LiF et du YF₃ présentant un coefficient d'extinction à 355 nm de 5.10⁻⁵, c'est-à-dire en utilisant une composition la plus proche possible de la stoechiométrie.

Sur la figure 7, on a représenté l'évolution du coefficient d'extinction (k) de YF₃ à 355 nm en fonction du rapport F/Y dans la couche de YF₃. On voit ainsi que le coefficient d'extinction peut être aussi faible que 1,6.10⁻⁵.

Le miroir préparé avec 51 couches alternées 25(HB)H de YF₃ et LiF de ce type, en commençant et en terminant par une couche de YF₃, possède une épaisseur totale de 3,1 µm.

L'augmentation du rapport F/Y est obtenu en favorisant pendant le dépôt la fluorisation des couches, par exemple par pulvérisation réactive d'une cible de YF₃ dans une atmosphère de gaz fluoré (CF₄).

La figure 7 montre qu'en améliorant la composition des couches de sorte que le rapport de composition F/Y se rapproche de celui du YF₃ massif on peut diminuer l'absorption.

Ses caractéristiques de réflectivité sont données sur la figure 8 qui représente la réflectivité du miroir en fonction de la longueur d'onde. On remarque ainsi que l'on obtient une réflectivité maximale atteignant 99 % à 351 nm avec un empilement constitué de 25(HB)H.

En revanche, un miroir réalisé de la même façon mais avec des couches présentant les caractéristiques de réflectivité de l'exemple 3, soit une transparence moindre, conduit à une réflectivité ne dépassant pas 95 % (courbe R' de la figure 6).

### Exemple 5 : Miroir trichroïque.

Dans cet exemple, on réalise un miroir ayant une réflectivité maximale à λ = 3 ω et un comportement anti-reflet à λ = 2ω et λ = *ω.* Pour obtenir ce résultat, on utilise des couches de YF₃ et LiF présentant les mêmes caractéristiques que celles utilisées dans l'exemple 4, mais les épaisseurs des couches ne sont plus périodiquement les mêmes. Elles peuvent varier pour les deux matériaux, typiquement de 10 nm à 100 nm. (En fait pour réaliser la fonction otpique décrite plus haut, il existe plusieurs successions de couches possibles).

Les empilements multicouches obtenus conformément à l'invention peuvent être utilisés pour la réalisation de miroirs ultraviolets, notamment aux longueurs d'ondes de 193, 248 ou 355 nm, ou pour la réalisation de fonctions plus complexes (miroirs trichroïques, filtres spectraux) capables de résister à des fluences lasers élevées. On peut aussi utiliser ces empilements comme protection de composants optiques déjà existants, par exemple de miroirs en oxyde, pour améliorer leur tenue au flux laser. Ces empilements peuvent également convenir pour la réalisation de couches anti-reflet dans l'ultraviolet, le visible ou l'infrarouge, stables optiquement et mécaniquement pour toute application le nécessitant.

## Revendications

1. Empilement multicouche de matériaux fluorures pour composant optique, constitué de couches alternées d'un premier matériau (1) à indice haut n₁ et d'un second matériau (2) à indice bas n₂ inférieur à n₁, **caractérisé en ce que** le premier et le second matériaux sont des fluorures transparents, capables de former l'un avec l'autre un composé défini et stable (3), et **en ce que** l'interface entre chaque couche du premier matériau et chaque couche du second matériau est formée au moins en partie de ce composé défini et stable (3).

2. Empilement selon la revendication 1, **caractérisé en ce que** l'interface est constituée principalement du composé défini et stable, résultant de l'association des deux matériaux.

3. Empilement selon la revendication 1, **caractérisé en ce que** l'interface est une interface graduelle comprenant un mélange du premier matériau et du composé défini, puis un mélange du second matériau et du composé défini, de façon à passer progressivement de la composition du premier matériau à la composition du second matériau.

4. Empilement selon l'une quelconque des revendications 1 à 3, **caractérisé en ce que** le premier matériau est choisi parmi ErF₃, YF₃, CeF₃ et BaF₂ et **en ce que** le second matériau est choisi parmi LiF, KF, BaF₂ et AlF₃.

5. Empilement selon la revendication 4, **caractérisé en ce que** le composé défini est choisi parmi YLiF₄, Y₃KF₁₀, LiErF₄, KCeF₄, K₃CeF₆, Ba₃AlF₉, Ba₃Al₂F₁₂, BaAlF₅, Ba₂Al₃F₁₃, Ba₂Y₂F₈ et YBaF₅.

6. Empilement selon l'une quelconque des revendications 1 à 3, **caractérisé en ce que** le premier matériau est YF₃ et le second matériau est LiF et le composé défini est YLiF₄.

7. Empilement selon l'une quelconque des revendications 1 à 6, **caractérisé en ce qu'**il a une épaisseur totale de 0,1 à 100 µm.

8. Procédé de fabrication d'un empilement multicouche selon la revendication 2, **caractérisé en ce que** l'on dépose successivement les couches de l'empilement par dépôt sous vide en pulvérisant alternativement au moyen d'un faisceau d'ions une cible du premier matériau (1) et une cible du second matériau (2).

9. Procédé de fabrication d'un empilement multicouche selon la revendication 3, **caractérisé en ce que** l'on dépose successivement les couches de l'empilement par dépôt sous vide à partir d'une cible du premier matériau et d'une cible du second matériau, par pulvérisation ionique en utilisant deux faisceaux d'ions de façon à déposer alternativement une couche du premier matériau, puis une couche du second matériau, et à déposer simultanément le premier (1) et le second (2) matériaux lors du passage d'une couche à l'autre en modulant dans le temps le courant de pulvérisation de l'une des cibles par rapport à l'autre de manière à obtenir un profil de composition d'interface progressif et continu entre deux couches successives.

10. Composant optique comprenant un empilement multicouche selon l'une quelconque des revendications 1 à 7.

11. Composant optique selon la revendication 10, **caractérisé en ce que** l'empilement joue le rôle de miroir, de filtre spectral ou de couche anti-reflet.

## Patentansprüche

1. Mehrschichten-Stapel aus Fluoridmaterialien für ein optisches Element, bestehend aus alternierenden Schichten aus einem ersten Material (1) mit hohem Index n₁ und aus einem zweiten Material (2) mit niedrigem Index n₂, der kleiner ist als n₁,
**dadurch gekennzeichnet, dass** das erste Material und das zweite Material transparente Fluoride sind, die miteinander eine definierte und stabile Verbindung (3) bilden können, und dass die Grenzfläche zwischen jeder Schicht aus dem ersten Material und jeder Schicht aus dem zweiten Material mindestens zum Teil aus dieser definierten und stabilen Verbindung (3) besteht.

2. Stapel nach Anspruch 1, **dadurch gekennzeichnet, dass** die Grenzfläche hauptsächlich aus der definierten und stabilen Verbindung besteht, die aus der Kombination der beiden Materialien resultiert.

3. Stapel nach Anspruch 1, **dadurch gekennzeichnet, dass** die Grenzfläche eine graduelle Grenzfläche (Übergangsfläche) ist, die eine Mischung aus dem ersten Material und der definierten Verbindung und dann eine Mischung aus dem zweiten Material und der definierten Verbindung in der Weise umfasst, dass ein allmählicher Übergang von der Zusammensetzung des ersten Materials zu der Zusammensetzung des zweiten Materials vorliegt.

4. Stapel nach einem der Ansprüche 1 bis 3, **dadurch gekennzeichnet, dass** das erste Material ausgewählt ist aus der Gruppe ErF₃, YF₃, CeF₃ und BaF₂ und dass das zweite Material ausgewählt ist aus der Gruppe LiF, KF, BaF₂ und AlF₃.

5. Stapel nach Anspruch 4, **dadurch gekennzeichnet, dass** die definierte Verbindung ausgewählt ist aus der Gruppe YLiF₄, Y₃KF₁₀, LiErF₄, KCeF₄, K₃CeF₆, Ba₃AlF₉, Ba₃Al₂F₁₂, BaAlF₅, Ba₂Al₃F₁₃, Ba₂Y₂F₃ und YBaF₅.

6. Stapel nach einem der Ansprüche 1 bis 3, **dadurch gekennzeichnet, dass** es sich bei dem ersten Material um YF₃ handelt, dass es sich bei dem zweiten Material um LiF handelt und dass es sich bei der definierten Verbindung um YLiF₄ handelt.

7. Stapel nach einem der Ansprüche 1 bis 6, **dadurch gekennzeichnet, dass** er eine Gesamtdicke von 0,1 bis 100 µm hat.

8. Verfahren zur Herstellung eines Mehrschichten-Stapels nach Anspruch 2, **dadurch gekennzeichnet, dass** man die Stapelschichten nacheinander abscheidet durch Abscheidung unter Vakuum durch alternierendes Zerstäuben mittels eines lonenstrahls eines Targets aus dem ersten Material (1) und eines Targets aus dem zweiten Material (2).

9. Verfahren zur Herstellung eines Mehrschichten-Stapels nach Anspruch 3, **dadurch gekennzeichnet, dass** man die Schicht des Stapels nacheinander abscheidet durch Abscheidung unter Vakuum, wobei man von einem Target aus dem ersten Material und einem Target aus dem zweiten Material ausgeht, durch lonenzerstäubung unter Verwendung von zwei Ionenstrahlen in der Weise, dass abwechselnd eine Schicht aus dem ersten Material und dann eine Schicht aus dem zweiten Material abgeschieden werden, und dass beim Übergang von einer Schicht zur anderen Schicht gleichzeitig das erste Material (1) und das zweite Material (2) abgeschieden werden, indem man zu diesem Zeitpunkt den Zerstäubungsstrom eines der Targets gegenüber dem anderen so moduliert, dass man zwischen zwei aufeinanderfolgenden Schichten ein progressives und kontinuierliches Profil der Zusammensetzung der Grenzfläche erhält.

10. Optisches Element, das einen Mehrschichtenstapel nach einem der Ansprüche 1 bis 7 umfasst

11. Optisches Element nach Anspruch 10, **dadurch gekennzeichnet, dass** der Stapel als Spiegel, als Spektral-Filter oder als Antireflexionsschicht fungiert.

## Claims

1. Multilayer stack of fluoride materials for an optical component, constituted by alternating layers of a first, high index material n₁ (1) and a second, low index material n₂ (2) lower than n₁, **characterized in that** the first and second materials are transparent fluorides able to form with one another a clearly defined, stable compound (3), and **in that** the interface between each layer of the first material and each layer of the second material is at least partly formed by said clearly defined, stable compound (3).

2. Stack according to claim 1, **characterized in that** the interface is mainly constituted by the clearly defined, stable compound resulting from the combination of the two materials.

3. Stack according to claim 1, **characterized in that** the interface is a gradual interface comprising a mixture of the first material and the defined compound, then a mixture of the second material and the defined compound, so as to pass progressively from the composition of the first material to the composition of the second material.

4. Stack according to any one of the claims 1 to 3, **characterized in that** the first material is chosen from among ErF₃, YF₃, CeF₃ and BaF₂ and **in that** the second material is chosen from among LiF, KF, BaF₂ and AlF₃.

5. Stack according to claim 4, **characterized in that** the defined compound is chosen from among YLiF₄, Y₃KF₁₀, LiErF₄, KCeF₄, K₃CeF₆, Ba₃AlF₉, Ba₃Al₂F₁₂, BaAlF₅, Ba₂Al₃F₁₃, Ba₂Y₂F₈ and YBaF₅.

6. Stack according to any one of the claims 1 to 3, **characterized in that** the first material is YF₃ and the second material is LiF and the defined compound is YLiF₄.

7. Stack according to any one of the claims 1 to 6, **characterized in that** it has a total thickness of 0.1 to 100 µm.

8. Process for the production of a multilayer stack according to claim 2, **characterized in that** successive deposition takes place of the layers of the stack by vacuum deposition by alternately sputtering by means of an ion beam a target of the first material (1) and a target of the second material (2).

9. Process for the production of a multilayer stack according to claim 3, **characterized in that** successive deposition takes place of the layers of the stack by vacuum deposition from a target of the first material and a target of the second material, by ion beam sputtering using two ion beams so as to alternately deposit a layer of the first material and then a layer of the second material and simultaneously depositing the first (1) and second (2) materials during the passage from one layer to the other by the time modulation of the sputtering current of one of the targets compared with the other so as to obtain a progressive and continuous interface composition profile between two successive layers.

10. Optical component comprising a multilayer stack according to one of the claims 1 to 7.

11. Optical component according to claim 10, **characterized in that** the stack serves as a mirror, a spectral filter or an antireflection coating.
